# EUROPÄISCHE PATENTSCHRIFT

(11) **EP 1 701 861 B1**
(45) Veröffentlichungstag und Bekanntmachung des Hinweises auf die Patenterteilung: **09.04.2008**
(21) Anmeldenummer: 04803994.5
(22) Anmeldetag: 17.12.2004
(51) Int. Cl.: B60N 2/02, B60N 2/06, B60N 2/44

(54) **ANTRIEB EINER SITZVERSTELLEINRICHTUNG FÜR KRAFTFAHRZEUGE**
DRIVE FOR ADJUSTING MOTOR VEHICLE SEATS
MECANISME DE COMMANDE D'UN DISPOSITIF DE REGLAGE DES SIEGES DE VEHICULES AUTOMOBILES

(30) Priorität: 09.01.2004 DE 102004001624
(43) Veröffentlichungstag der Anmeldung: 20.09.2006
(73) Patentinhaber: IMS Gear GmbH, 78166 Donaueschingen (DE); KEIPER GmbH & Co. KG, 67657 Kaiserslautern (DE)
(72) Erfinder: WÖHRLE, Michael, 78078 Niedereschach (DE); DROPMANN, Hans, 50825 Köln (DE); GAPP, Andreas, 78166 Donaueschingen (DE); KNÖPFLE, Urban, 79822 Titisee-Neustadt (DE); WETZIG, Stefan, 58256 Ennepetal (DE)
(74) Vertreter: Westphal, Klaus
(86) Internationale Anmeldenummer: PCT/EP2004/014385
(87) Internationale Veröffentlichungsnummer: WO 2005/065989

(56) Entgegenhaltungen:
- EP-A- 0 979 750
- EP-A- 1 442 923
- WO-A-99/51456
- DE-C1- 10 003 305

## Beschreibung

Die Erfindung betrifft einen Antrieb einer Sitzverstelleinrichtung für Kraftfahrzeuge mit einer Spindel, welche an einer ersten von zwei relativ zueinander verstellbaren Schienen mittels mindestens einer endseitig an der Spindel befindlichen Halterung befestigt ist, und mit einem von einem Motor angetriebenen Getriebe, das an der zweiten Schiene angeordnet ist.

Ein bekannter Antrieb für Sitzverstelleinrichtungen ist in EP 1 068 093 B1 beschrieben. Der Antrieb ist in der dortigen und in der vorliegenden Figur 1 dargestellt. Wie ersichtlich, ist eine Halteplatte 1, auf der der Sitz eines Kraftfahrzeuges zu befestigen ist, einer Oberschiene 3 zugeordnet. An der Halteplatte 1 sind Befestigungslaschen 11 für einen Motor 2 vorgesehen, so dass dieser fest mit der Halteplatte 1 und damit fest mit der Oberschiene verbunden werden kann. Beidseitig am Motor 2 sind Antriebswellen 21, 22 angeordnet. Hierzu können flexible Wellen verwendet werden. Diese Antriebswellen 21, 22 stellen die Verbindung zu einem Getriebe 9 her, das in der EP 1 068 093 B1 ausführlich beschrieben ist. Dieses Getriebe 9 sitzt in einem U-förmigen Haltebügel 8 mit Befestigungslöchern 8a, durch welche das Getriebe 9 an der Oberschiene 3 befestigt wird.

Die Oberschiene 3 gleitet direkt oder über nicht dargestellte Verstell- und/oder Lagerelemente auf einer am Fahrzeugboden des Kraftfahrzeuges festgelegten Unterschiene 4.

In Funktionslage der Oberschiene 3 und Unterschiene 4 werden diese durch ihre Berührungs- bzw. Lagerungsbereiche so gehalten, dass sich ein Hohlraum ergibt. Innerhalb dieses Hohlraumes ist eine Gewindespindel 5 angeordnet. Diese Gewindespindel 5 wird zwischen Halterungen 6a und 6b aufgenommen, die auf der Unterschiene 4 fest angeordnet sind. Hierfür verfügen die Halterungen 6a und 6b über Befestigungslöcher 6e, durch welche geeignete Schraubverbindungen oder ähnliche Befestigungsmittel ragen und an Befestigungslöchern 4a der Unterschiene 4 gehalten werden. Die Spindel 5 ist selbst über geeignete Befestigungsmuttern 6c, 6d an den Halterungen 6a und 6b festgeschraubt.

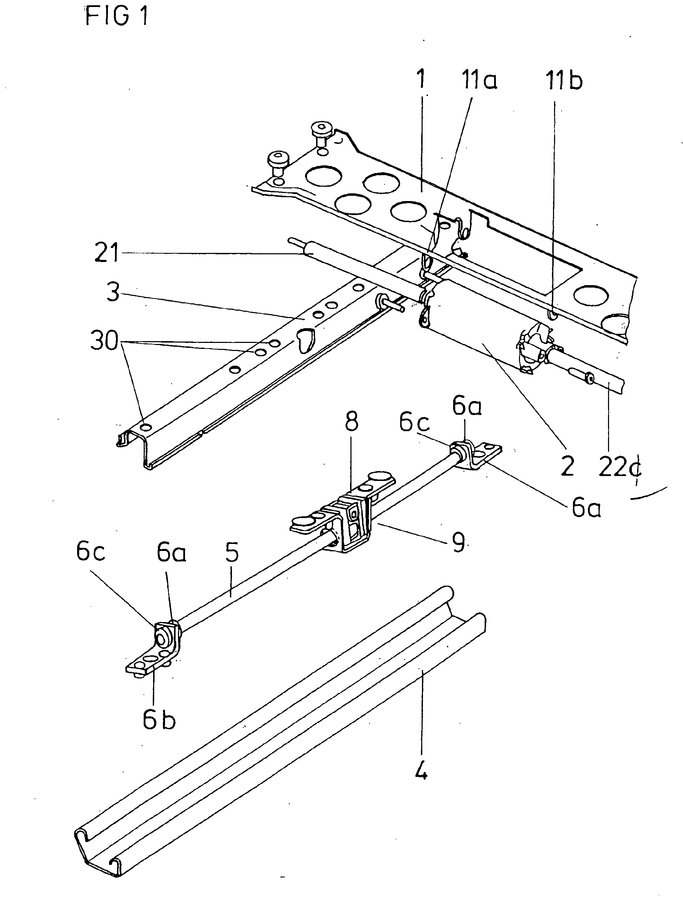

Problematisch bei dem in Figur 1 dargestellten Antrieb ist die Gestaltung der Halterungen 6a und 6b.

Diese L-förmig gestalteten Halterungen 6a, 6b werden üblicherweise als Stanzbiegeteile hergestellt. Dabei werden die Halterungen zunächst als streifenförmige Elemente aus Metallplatten herausgestanzt und anschließend im rechten Winkel gebogen. Solche Stanzbiegeteile sind zwar in der Herstellung verhältnismäßig einfach und damit preisgünstig. Nachteilig ist jedoch die zu geringe Festigkeit dieser Halterungen. Solche Stanzbiegeteile können nämlich nur begrenzte Kräfte im Crashfall aufnehmen. Es hat sich in Versuchen herausgestellt, dass solche Stanzbiegeteile im Crashfall verhältnismäßig geringe Kräfte von beispielsweise bis zu etwa 20 kN verkraften können.

Hier setzt die vorliegende Erfindung an.

Die Erfindung hat das Ziel, den bekannten Antrieb so weiterzubilden, dass im Crashfall von der oder den Halterungen höhere Kräfte aufgenommen werden können als dies bisher der Fall war.

Dokument DE-C-100 03 305 offenbart einen Antrieb nach Oberbegriff des Anspruchs 1.

Das Ziel der Erfindung wird erreicht durch einen Antrieb mit den Merkmalen des Anspruchs 1.

Weiterbildungen der Erfindung sind Gegenstand der Unteransprüche.

Die Erfindung besteht im Wesentlichen darin, die Halterung so auszubilden, dass das oder die Enden der Spindel nicht mehr mittels Verschraubungen an L-förmigen Stanzbiegeteilen festgelegt sind, sondern dieses Ende oder diese Enden der Spindel in wannenförmigen Auflageflächen der Halterungen feststehend aufsitzen.

In einer bevorzugten Ausführungsform der Erfindung wird die feststehende Verbindung zwischen den Halterungen und den Enden der Spindel mittels Laserschweißung erreicht. Hierfür werden zweckmäßigerweise zwei zur Spindelachse parallel verlaufende Schweißnähte am Randbereich der wannenförmigen Auflagefläche angebracht, die die Halterung mit einem Ende der Spindel verbinden. Vorzugsweise ist die Schweißnaht mindestens etwa 10 mm, vorzugsweise etwa 15 mm, lang. Dies bedingt selbstverständlich, dass die wannenförmige Auflagefläche in der Halterung ebenso entsprechend lang dimensioniert ist.

Im Hinblick auf eine ausreichend hohe Festigkeit der Spindel hat es sich als vorteilhaft erwiesen, diese aus gerolltem Rundstahl herzustellen. Zur Festlegung der Enden der Spindel in den wannenförmigen Auflageflächen der Halterungen werden die Enden beipielsweise so drehbearbeitet, dass deren Durchmesser kleiner ist als der Fußkreis des Gewindes der Spindel. Der Durchmesser kann beispielsweise ca. 7 mm betragen. Durch diese Drehbearbeitung der Enden der Spindel liegen diese satt in der entsprechend geformten wannenförmigen Auflagefläche, die ebenfalls ungefähr eine Rundung mit einem gedachten Durchmesser, die dem Durchmesser der Enden der Spindel entspricht. Dabei ist zu berücksichtigen, dass der Durchmesser der Auflagefläche gleich etwas größer gestaltet werden muss als der Durchmesser der Enden der Spindel, damit diese satt in der wannenförmigen Auflagefläche sitzen können. Damit ist eine optimale Laserschweißung möglich.

In einer Weiterbildung der Erfindung sind die Halterungen L-förmig ausgebildet, wobei der horizontale Schenkel der Halterung plattenförmig ist und ein Befestigungsloch aufweist. Der vertikale Schenkel besteht dagegen aus einem massiven, blockartigen Teil, auf dessen Oberseite die erwähnte, wannenförmige Auflagefläche für die Spindelenden ausgebildet ist. Diese wannenförmige Auflagefläche erstreckt sich parallel zum horizontalen Schenkel der Halterung.

Zur Erzielung einer hohen Crashfestigkeit im montierten Zustand hat der horizontale Schenkel der Halterung eine Breite, die etwa annähernd dem Innenabstand der im Querschnitt U-förmig gestalteten Unterschiene, in die die Halterung eingesetzt wird, entspricht. Eine solche Wahl der Breite hat sich als günstig herausgestellt, um im auftretenden Crashfall ausreichend Kräfte aufnehmen zu können.

Der massive, blockartig gestaltete vertikale Schenkel der Halterung weist eine geringere Breite als der horizontale Schenkel der Halterung auf. Dies hat den Vorteil, dass sich die Oberschiene samt Kugellager beim Verfahren des Sitzes am horizontalen Schenkel der Halterung vorbeibewegen kann. In einer Weiterbildung der Erfindung verfügt der vertikale Schenkel am inneren Übergangsbereich zum horizontalen Schenkel der Halterungen hin über einstückig angeformte, randseitige Verstärkungsbänder, die ebenfalls im Crashfall zusätzliche Kräfte aufnehmen.

Zur Erhöhung der aufzunehmenden Crashkräfte bei einem Auffahrunfall eines Kraftfahrzeuges sind auf einer planen Auflagefläche an der Unterseite der Halterung ein oder mehrere hervorstehende Nocken ausgebildet. So kann z.B. ein zwischen Befestigungsloch und vorderem Rand des horizontalen Schenkels der Halterung hervorstehender Nocken in eine entsprechende Ausnehmungen an der Unterschiene der Sitzverstelleinrichtung eingreifen. Ein zweiter Nocken kann sich auf der planen Auflagefläche an der Unterseite der Halterung im Bereich des massiven, blockartigen gestalteten, vertikalen Schenkels befinden.

Die in der Unterschiene vorgesehenen Ausnehmungen für den oder die erwähnten Nocken sind vorzugsweise so gestaltet, dass eine Fixierung der Halterungen samt Spindel in der Unterschiene möglich ist. Hierfür muss man wissen, dass bei der vorgesehenen Montage des erfindungsgemäßen Antriebes zunächst der U-förmige Haltebügel (vgl. Bezugszeichen 8 in Fig. 1), in dem das Getriebe sitzt, an die Oberschiene geschraubt wird. In einer geeigneten Montagevorrichtung wird dann die Oberschiene und Unterschiene ineinandergeschoben, wobei Haltefinger der Montageeinrichtung unter die Halterungen greifen. Anschließend werden die Oberschiene und die Unterschiene zum "Einlaufen" des zwischen Oberschiene und Unterschiene befindlichen Kugellagers mehrmals, z.B. 10 bis 20 mal, hin- und herbewegt. Schließlich werden die Haltefinger der Montageeinrichtung weggezogen, so dass bei der nächsten Schiebebewegung die Nocken, sobald diese über die Ausnehmungen in der Unterschiene laufen, dort einrasten können.

Im Gegensatz zu herkömmlichen Schraub- oder Nietverbindungen zeichnet sich damit die vorliegende Erfindung durch eine vereinfachte Montage der Halterungen auf der Unterschiene aus. Zudem sind die Halterungen lösbar auf der Unterschiene befestigt, was im Falle einer notwendigen Reparatur oder eines Austauschs der Antriebskomponenten günstig ist.

Die erwähnten Nocken erhöhen nicht nur die aufzunehmenden Crashkräfte bei einem Unfall des Kraftfahrzeuges. Die beiden Nocken sorgen auch für eine Verdrehsicherung bei der Montage der Unterschiene am auf den Fahrzeugboden. Ein unbeabsichtigtes Verdrehen bzw. seitliches Ausweichen der Halterung samt Spindel wird nämlich vermieden, wenn die Unterschiene samt der über die Nocken vormontierten Spindel am auf den Fahrzeugboden festgeschraubt wird. Hierfür werden nämlich Schrauben durch die Befestigungslöcher der Halterung und durch die hierzu ausgerichteten Löcher der Unterschiene gesteckt und in Befestigungsmuttern des Fahrzeugbodens festgeschraubt. Dem bei diesem Schraubvorgang wirkenden Drehmoment wirken die in den Ausnehmungen der Unterschiene sitzenden Nocken entgegen, so dass die Spindel samt Getriebe exakt ausgerichtet in der Unterschiene verbleibt.

Zweckmäßigerweise wird die zum Getriebe hin weisende Fläche des vertikalen, blockartig ausgebildeten Schenkels der Halterung als plane Anschlagfläche für das Getriebe des Antriebes ausgestaltet. Diese plane Anschlagfläche ist orthogonal zu dem horizontalen Schenkel der Halterung ausgerichtet.

Obwohl die erfindungsgemäße Halterung auf unterschiedlichste Art und Weise hergestellt werden kann, bietet es sich an, dieses als Kaltfließpressteil aus Metall, insbesondere Stahl, herzustellen. Der besondere Vorteil eines solchen Kaltfließpressteiles liegt darin, dass hohe Crashkräfte bis zu 30 kN bei geringem Bauraum aufgenommen werden können.

Die erfindungsgemäße Ausgestaltung der Halterung ermöglicht nicht nur die Aufnahme höherer Kräfte im Crashfall, sondern zeichnet sich auch durch einen verlängerten Verfahrweg des Getriebes aus, vorausgesetzt, die Befestigungslöcher für die Halterungen sind wie im Stand der Technik vorgegeben. Dieser verlängerte Verfahrweg ist möglich, weil das Getriebe unmittelbar bis zur Anschlagfläche der Halterung fahren kann und die Halterung selbst kürzer baut als Halterungen nach dem Stand der Technik.

Der erfindungsgemäße Antrieb wird nachfolgend anhand eines Ausführungsbeispieles im Zusammenhang mit weiteren Figuren näher erläutert. Es zeigen:
- Fig. 1: den bereits erläuterten Antrieb nach dem bekannten Stand der Technik mit einer an ihren Enden über Halterungen festgelegten Spindel, auf der ein längsverfahrbares Getriebe sitzt,
- Fig. 2: ein auf einer Spindel sitzendes Getriebe ähnlich zu Fig. 1, jedoch mit Halterungen, die nach einem Ausführungsbeispiel der Erfindung gestaltet sind,
- Fig. 3-6: die in Fig. 2 gezeigten Halterungen in unterschiedlichen Ansichten.

In den nachfolgenden Figuren bezeichnen, sofern nicht anders angegeben, gleiche Bezugszeichen gleiche Teile mit gleicher Bedeutung.

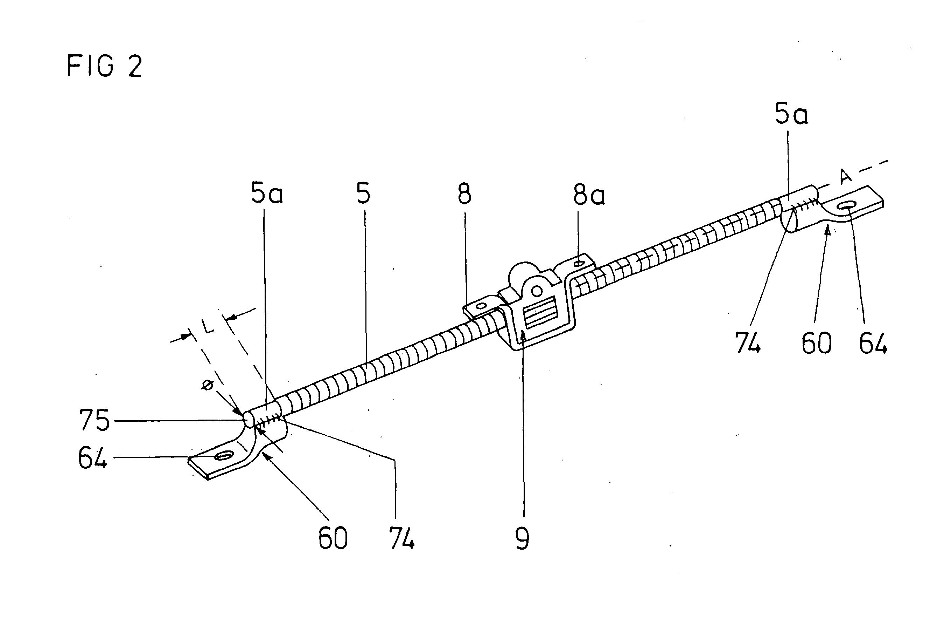

In Fig. 2 ist, ähnlich wie in Fig. 1, wiederum eine Spindel 5 und ein auf der Spindel 5 entlang der Spindelachse A verfahrbares Getriebe 9 dargestellt. Das Getriebe 9 ist in der bereits bekannten, U-förmigen Halterung 8 festgelegt, welche über Befestigungslöcher 8a an der Oberschiene 3 (vgl. Fig. 1) eines Fahrzeugsitzes festschraubbar ist.

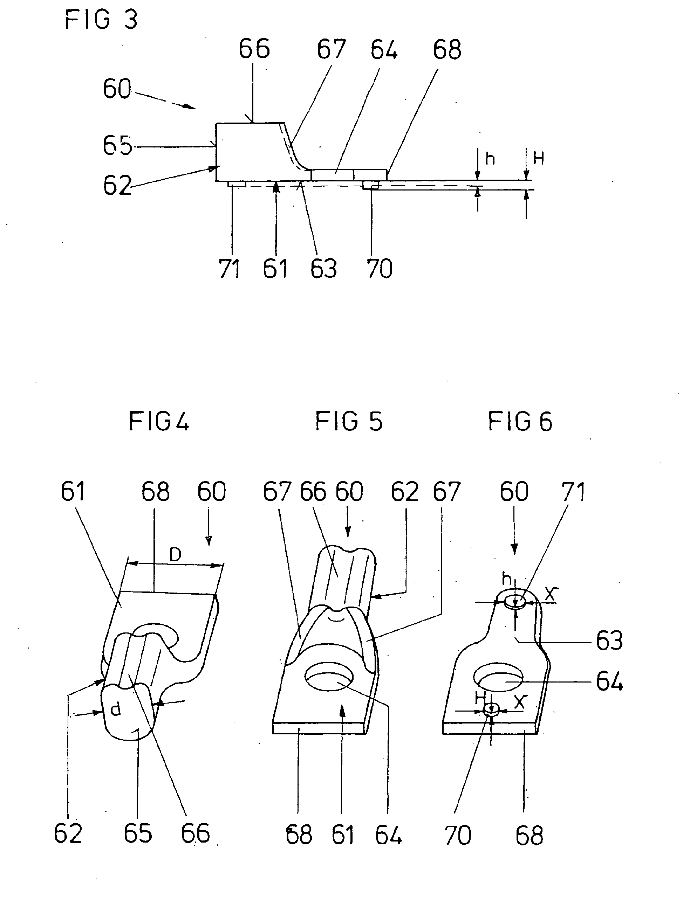

Im Gegensatz zur Darstellung von Fig. 1 ist die Spindel 5 an ihren Enden 5a mit besonders gestalteten Halterungen 60, die im Zusammenhang mit den Figuren 3-6 noch näher erläutert werden, feststehend verbunden.

Die Halterungen 60 sind, wie die Seitenansicht von Fig. 3 zeigt, L-förmig gestaltet und weisen einen plattenförmigen, horizontalen Schenkel 61 auf sowie einen vertikalen Schenkel 62, der als massives, blockartiges Teil gestaltet ist. In dem plattenförmigen, horizontalen Schenkel 61 ist ein Befestigungsloch 64 eingearbeitet. Dieses Befestigungsloch 64 dient dazu, die Halterungen 60 über die Unterschiene 4 (vgl. hierzu Fig. 1) am Fahrzeugboden mittels geeigneter Befestigungselemente festzuschrauben. Hierfür sind z. B. Schraub- oder Nietverbindungen geeignet.

Der horizontale Schenkel 61 der Halterung 60 verfügt auf seiner unteren, dem vertikalen Schenkel 62 abweisenden Seite über eine plane Auflagefläche 63, die zum Aufsetzen auf die Unterschiene 4 vorgesehen ist. Aus dieser Auflagefläche 63 ragen zwei Nocken 70, 71 hervor. Der zwischen dem Befestigungsloch 64 und dem vorderen Rand 68 der Halterung 60 befindliche erste Nocken 70 greift in eine entsprechende Ausnehmung in der Unterschiene 4 des Sitzgestelles. Ein zweiter Nocken 71 ragt unterhalb des vertikalen, blockartigen Schenkels 62 aus der Auflagefläche 63 hervor. Auch dieser Nocken 71 ragt in eine entsprechende Ausnehmung in der Unterschiene 4 des Sitzgestelles. Der Nocken 70 hat eine Höhe H, welche größer ist als die Höhe h des Nockens 71. Der Durchmesser x des Nockens 70 ist kleiner als der Durchmesser X des zweiten Nockens 71. Die Durchmesser x und X der beiden Nocken 70, 71 sind deutlich kleiner als der Durchmesser des Befestigungsloches 64. Beide Nocken 70, 71 erhöhen im montierten Zustand der Halterung 60 der Unterschiene 4 (vgl. Fig. 1) die Aufnahme der Crashkräfte. Beide Nocken 70 und 71 dienen zusätzlich als für eine Verdrehsicherung, bei der Montage der Unterschiene 4 auf den Fahrzeugboden.

Wie insbesondere aus den perspektivischen Darstellungen von Fig. 4 und Fig. 5 der Halterung 60 hervorgeht, weist der horizontale Schenkel 61 der Halterung eine deutlich größere Breite D als der massive, blockartige, vertikale Schenkel 62 der Halterung 60 auf. Die Breite des vertikalen Schenkels 62 ist mit d bezeichnet. Die Breite D das horizontalen Schenkels 61 ist ungefähr so breit wie der Innenabstand ID der Unterschiene 4 (vgl. Fig. 1) .

Auf der Oberseite des vertikalen Schenkels 62 verläuft eine rinnenartige bzw. wannenartige Vertiefung 66, die als Auflagefläche für jeweils ein Ende 5a der Spindel 5 (vgl. Fig. 2) dient. Diese Auflagefläche kann z.B. zwischen 10 und 15 mm lang sein.

Zur Befestigung der aus gerolltem Rundstahl bestehenden Spindel 5 sind deren Enden 5a z. B. abgedreht, d. h. dass die Enden 5a über kein Gewinde mehr verfügen. Der Durchmesser der Enden 5a beträgt beispielsweise etwa 6 bis 7 mm, während der Außendurchmesser des Gewindes 9 mm betragen kann. Der Radius der wannenartigen Vertiefung 66 ist hierzu passend, vorzugsweise etwas größer gestaltet, so dass die Enden 5a der Spindel 5 flächig bzw. linienförmig in der wannenartigen Vertiefung 66 aufliegen können. Zur Befestigung der Enden 5a in dieser wannenartigen Vertiefung 66 werden diese an den links und rechts zugänglichen Stellen jeweils mit einer Schweißnaht, vorzugsweise mittels Laserschweißung, befestigt. Die Länge der Schweißnähte sollte mindestens annähernd etwa 10 mm, vorzugsweise etwa 15 mm, betragen.

Um die Aufnahme von Crashkräften in Zug- und Druckbelastung bei dieser Halterung 60 zu erhöhen, ist, wie in Fig. 3 besonders deutlich zu erkennen, der Übergang vom horizontalen Schenkel 61 zum vertikalen Schenkel 62 nicht exakt im 90° Winkel gestaltet sondern in einem stumpferen Winkel hierzu. Zudem befinden sich an den äußeren Rändern des Übergangs einstückig angeformte Verstärkungsbänder 67, welche den Randbereich des schrägen Übergangs zwischen vertikalem Schenkel 62 und horizontalem Schenkel 61 bei Druck- oder Zugbelastung verstärken.

Schließlich weist die Halterung 60 eine plane Anschlagfläche 65 auf, welche die untere Auflagefläche 63 und die obere, wannenartige Auflagefläche 66 miteinander verbindet. Diese plane Anschlagfläche 65 kann als Anschlag für das Getriebe 9 in Endstellung dienen.

Im Zusammenhang mit dem Ausführungsbeispiel wurde immer davon gesprochen, dass beide Enden der Spindel in den erfindungsgemäß ausgestalteten Halterungen gehalten sind. Es liegt jedoch auch im Rahmen der Erfindung, dass nur ein Ende der Spindel von solch einer Halterung und das andere Ende in herkömmlicher Weise von einer anderen Halterung gehalten wird.

Wenngleich in dem dargestellten Ausführungsbeispiel davon die Rede war, dass das Getriebe 9 auf einer Spindel verfahrbar angeordnet ist, so umfasst die vorliegende Erfindung auch, die Spindel durch eine Zahnstange zu ersetzen. Es muss lediglich dafür gesorgt werden, dass die Enden einer solchen Zahnstange - ähnlich wie in der Darstellung von Fig. 2 - einen abgedrehten Endabschnitt aufweisen, der mit seinem Durchmesser in die wannenförmige Ausnehmung der Auflagefläche 66 des vertikalen Schenkels 62 der Halterung 60 passt und dort mit diesem sicher, beispielsweise mittels Laserschweißung, befestigt werden kann.

### Bezugszeichenliste

- 1: Halteplatte
- 2: Antriebsmotor
- 3: Obenschiene
- 4: Untenschiene
- 4a: Befestigungsloch
- 5: Spindel
- 5a: Bereich mit veringertem Durchmesser
- 6: Halterung
- 6a: Halterung
- 6b: Halterung
- 6c: Befestigungsmutter
- 6d: Befestigungsmutter
- 6e: Befestigungslöcher
- 8: Halterung
- 8a: Befestigungsloch
- 9: Getriebe
- 11: Befestigungslasche

- 21: Antriebswelle
- 22: Antriebswelle

- 30: Befestigungslöcher

- 60: Halterung
- 61: horizontaler Schenkel
- 62: vertikaler Schenkel
- 63: Auflagefläche
- 64: Befestigungsloch
- 65: Anschlagfläche
- 66: Auflagefläche
- 67: Verstärkungsband
- 68: Rand

- 70: Nocken
- 71: Nocken
- 74: Schweißnaht
- 75: Schweißnaht

- A: Spindelachse
- D: Breite von 61
- d: Breite von 62
- H: Höhe von 70
- ID: Innenabstand von 4
- h: Höhe von 71
- L: Länge von 5a
- Ø: Durchmesser von 5a
- x: Durchmesser von 70
- X: Durchmesser von 71

## Patentansprüche

1. Antrieb einer Sitzverstelleinrichtung insbesondere für Kraftfahrzeuge mit einer Spindel (5), welche an einer ersten (4) von zwei relativ zueinander verstellbaren Schienen (3, 4) mittels mindestens einer endseitig an der Spindel (5) befindlichen Halterung (60) befestigt ist, und mit einem von einem Motor (2) angetriebenen Getriebe (9), das an der zweiten Schiene (3) angeordnet ist,
**dadurch gekennzeichnet, dass** die mindestens eine Halterung (60) eine wannenförmige, äußere Auflagefläche (66) auf einem massiven, blockartigen Schenkel (61) aufweist, in welcher ein Ende der Spindel (5) feststehend aufsitzt.

2. Antrieb nach Anspruch 1,
**dadurch gekennzeichnet, dass** zwei solche Halterungen (60) vorgesehen sind, von denen jeweils eine Halterung (60) zur Halterung eines von zwei Enden (5a) der Spindel (5) dient.

3. Antrieb nach Anspruch 1 oder 2,
**dadurch gekennzeichnet, dass** die Spindel (5) mittels Laserschweißung auf der wannenförmigen Auflagefläche (66) befestigt ist.

4. Antrieb nach Anspruch 3,
**dadurch gekennzeichnet, dass** die Spindel (5) mittels zwei parallel zur Spindelachse (A) verlaufenden Schweißnähten (74, 75) am Randbereich der wannenförmigen Auflagefläche (66) befestigt ist.

5. Antrieb nach Anspruch 4,
**dadurch gekennzeichnet, dass** jede der Schweißnähte (74, 75) mindestens annähernd etwa 10 mm lang ist.

6. Antrieb nach einem der Ansprüche 1-5,
**dadurch gekennzeichnet, dass** die Spindel (5) aus gerolltem Rundstahl hergestellt ist.

7. Antrieb nach einem der Ansprüche 1-6,
**dadurch gekennzeichnet, dass** die Enden (5a) der Spindel (5) drehbearbeitet sind und einen Durchmesser (∅) aufweisen, welcher kleiner als der Fußkreis der Verzahnung der Spindel (5) ist.

8. Antrieb nach Anspruch 7,
**dadurch gekennzeichnet, dass** die Enden der Spindel (5) einen Durchmesser von etwa 7 mm aufweisen.

9. Antrieb nach Anspruch 1, **dadurch gekennzeichnet, dass** die wannenförmige Auflagefläche (63) parallel zum horizontalen Schenkel (61) verläuft.

10. Antrieb nach Anspruch 9,
**dadurch gekennzeichnet, dass** der horizontale Schenkel (61) zur Befestigung am Fahrzeugboden ein Befestigungsloch (64) aufweist.

## Claims

1. Drive for a seat adjusting device, in particular for motor vehicles, with a spindle (5) which is affixed to a first rail (4) of two rails (3, 4) that are adjustable relative to one another, by means of at least one support (60) that is located on the end of the spindle (5), and with a gear mechanism (9) which is driven by a motor (2) and which is arranged on the second rail (3), **characterised in that** the at least one support (60) has a trough-shaped, outer bearing surface (66) on a solid, block-like limb (61), in which bearing surface one end of the spindle (5) rests in a stationary manner.

2. Drive according to claim 1, **characterised in that** two such supports (60) are provided, of which in each case one support (60) serves to support one of two ends (5a) of the spindle (5).

3. Drive according to claim 1 or 2, **characterised in that** the spindle (5) is attached to the trough-shaped bearing surface (66) by means of laser welding.

4. Drive according to claim 3, **characterised in that** the spindle (5) is affixed to the edge area of the trough-shaped bearing surface (66) by means of two weld seams (74, 75) running parallel to the spindle axis (A).

5. Drive according to claim 4, **characterised in that** each of the weld seams (74, 75) is at least approximately 10 mm long.

6. Drive according to one of the claims 1-5, **characterised in that** the spindle (5) is manufactured from rolled round steel.

7. Drive according to one of the claims 1-6, **characterised in that** the ends (5a) of the spindle (5) are lathe-turned and have a diameter (∅) that is smaller than the root diameter of the toothed work of the spindle (5).

8. Drive according to claim 7, **characterised in that** the ends of the spindle (5) have a diameter of approximately 7 mm.

9. Drive according to claim 1, **characterised in that** the trough-shaped bearing surface (63) runs parallel to the horizontal limb (61).

10. Drive according to claim 9, **characterised in that** the horizontal limb (61) has an attachment hole (64) for fastening to the vehicle floor.

## Revendications

1. Mécanisme de commande d'un dispositif de réglage des sièges, en particulier, pour véhicules automobiles, comportant une broche (5) fixée à un premier (4) de deux rails (3, 4) mobiles relativement l'un par rapport à l'autre au moyen d'au moins un support (60) se trouvant à une extrémité sur la broche (5), et comportant un engrenage (9) commandé par un moteur (2) placé sur le second rail (3),
**caractérisé en ce qu'**
au moins un support (60) présente une surface d'appui en forme de cuvette et extérieure (66) sur une branche massive et de type bloc (62), dans laquelle repose à demeure une extrémité de la broche (5).

2. Mécanisme de commande selon la revendication 1,
**caractérisé en ce que**
deux supports (60) sont prévus, dont respectivement un support (60) sert au support de l'une des deux extrémités (5a) de la broche (5).

3. Mécanisme de commande selon la revendication 1 ou 2,
**caractérisé en ce que**
la broche (5) est fixée au moyen d'un soudage au laser sur la surface d'appui en forme de cuvette (66).

4. Mécanisme de commande selon la revendication 3,
**caractérisé en ce que**
la broche (5) est fixée à la zone de bord de la surface d'appui en forme de cuvette (66) au moyen de deux joints de soudure (74, 75) parallèles à la broche de broche (a).

5. Mécanisme de commande selon la revendication 4,
**caractérisé en ce que**
chacun des joints de soudure (74, 75) est au moins approximativement d'environ 10 mm de longueur.

6. Mécanisme de commande selon la revendication 1 à 5,
**caractérisé en ce que**
la broche (5) est en acier rond enroulé.

7. Mécanisme de commande selon la revendication 1 à 6,
**caractérisé en ce que**
les extrémités (5a) de la broche (5) sont tournées et présentent un diamètre (∅) plus petit que le diamètre de pied de denture de la denture de la broche (5).

8. Mécanisme de commande selon la revendication 7,
**caractérisé en ce que**
les extrémités de la broche (5) présentent un diamètre d'environ 7 mm.

9. Mécanisme de commande selon la revendication 1,
**caractérisé en ce que**
la surface d'appui en forme de cuvette (66) s'étend parallèlement à la branche horizontale (61).

10. Mécanisme de commande selon la revendication 9,
**caractérisé en ce que**
la branche horizontale (61) présente un trou de montage (64) pour la fixation au plancher du véhicule.
